(19) Europäisches Patentamt

European Patent Office

Office européen des brevets

(11) **EP 0 999 155 A1**

(12) **EUROPÄISCHE PATENTANMELDUNG**

(43) Veröffentlichungstag:
10.05.2000 Patentblatt 2000/19

(51) Int. Cl.7: **B65G 53/46**

(21) Anmeldenummer: **99117772.6**

(22) Anmeldetag: **09.09.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **05.11.1998 DE 19850925**
**05.11.1998 DE 19850927**

(71) Anmelder: **Waeschle GmbH**
**88250 Weingarten (DE)**

(72) Erfinder: **Metzler, Eugen**
**88370 Ebenweiler (DE)**

(54) **Zellenradschleuse und Verfahren zur Herstellung einer Gehäusebohrung**

(57)     Eine Zellenradschleuse zum Fördern oder Dosieren von Schüttgut umfaßt ein Gehäuse (1) mit einem Zulaufschacht (2) und einem Auslaufschacht (3) für das Schüttgut sowie ein in einer Gehäusebohrung (4) drehbar gelagertes Zellenrad (6) mit einer Anzahl sich im wesentlichen radial erstreckender Stege (5). Der Querschnitt der Gehäusebohrung umfaßt zwei sich zumindest über die axiale Breite des Zellenrads erstrekkende Kreisbogen (10.1), (10.2) deren Zentrumspunkte (12.1), (12.2) um einen Abstand (d) zueinander beabstandet sind.

    Eine Zellenradschleuse mit einer zwei Kreisbogen umfassenden Gehäusebohrung (4) läßt sich auf einfache Weise dadurch herstellen, daß das Gehäuse (1) auf der Bearbeitungsmaschine zuerst auf den Zentrumspunkt (12.1) des ersten Kreisbogens (10.1) justiert wird, woraufhin die Gehäusebohrung durch spanende Bearbeitung auf den Radius ($R_1$) des ersten Kreisbogens ausgearbeitet wird. Nachfolgend wird das Gehäuse durch Versetzen um einen Abstand (d) auf den Zentrumspunkt (12.2) des zweiten Kreisbogens (10.2) justiert und die Gehäusebohrung spanend auf den Radius ($R_2$) des zweiten Kreisbogens ausgearbeitet.

Fig. 2

EP 0 999 155 A1

## Beschreibung

Die Erfindung betrifft eine Zellenradschleuse zum Fördern oder Dosieren von Schüttgut, umfassend ein Gehäuse mit einem Zulaufschacht und einem Auslaufschacht für das Schüttgut sowie ein in einer Bohrung des Gehäuses drehbar gelagertes Zellenrad mit einer Anzahl sich im wesentlichen radial erstreckender Stege, wobei der Querschnitt der Bohrung zwei sich zumindest über die axiale Breite des Zellenrads erstreckende Kreisbogen umfaßt, sowie ein Verfahren zur Herstellung einer derartigen Gehäusebohrung.

## Stand der Technik

Eine gattungsgemäße Zellenradschleuse wird in der Offenlegungsschrift DE 41 35 593 A1 offenbart. Die Kammern des sich drehenden Zellenrades werden bei dieser bekannten Schleuse über den Zulaufschacht mit Schüttgut befüllt und tragen dieses bei Erreichen des Auslaufschachtes in denselben aus. Der Auslaufschacht ist mit einer unter Überdruck stehenden Förderleitung verbunden, während im Zulaufschacht atmosphärischer Druck herrscht. Das frei gewordenen Volumen der sich in den Auslaufschacht entleerenden, nachfolgend aufwärts drehenden Kammern wird durch komprimiertes Fördergas aus der Förderleitung ersetzt und über eine in Drehrichtung vor dem Zulaufschacht befindliche Entlüftungsöffnung auf atmosphärischen Druck entspannt.

Die bereichsweise kreisförmig ausgebildete Gehäusebohrung der Zellenradschleuse ist zulaufseitig um eine kreisbogenförmige Ausnehmung erweitert, die sich axial über die gesamte Breite des Zellenrades erstrecken kann. Diese Ausnehmung leitet Leckageluft, die an den abwärtsdrehenden Stegen des Zellenrades vorbei vom Auslaufschacht zum Zulaufschacht strömt, um letzteren herum bis zur Entlüftungsöffnung. Auf diese Weise soll ein ungehinderter Zulauf von Schüttgut in die Kammern des Zellenrades sichergestellt werden. Der Querschnitt der Gehäusebohrung setzt sich daher im wesentlichen aus zwei Kreisbogen zusammen, die den gleichen Zentrumspunkt besitzen, sich jedoch im Radius unterscheiden. Die geringste lichte Weite des von den Kreisbogen begrenzten Querschnitts ist enger als der Durchmesser des Zellenrads.

Ein derartig ausgebildetes Gehäuse ist durch spanende Fertigungsverfahren nur mit erheblichem Aufwand auszubilden. Darüber hinaus darf sich das Zellenrad unter Wirkung des Überdrucks im Auslaufschacht nur um ein geringes Maß zum Zulaufschacht hin versetzten, da es andernfalls im Übergangsbereich zwischen den Kreisbogen an der Bohrung des Gehäuses anstößt. Lokale Verformungen des Schleusengehäuses, die auf eine Abkühlung des im Bereich der Entlüftungsöffnung entspannenden Druckgases zurückzuführen sind, können durch die im Stand der Technik bekannte Ausbildung der Gehäusebohrung ebenfalls nicht kompensiert werden.

## Aufgabe

Der vorliegenden Erfindung liegt die Aufgabe zugrunde, mit geringem Fertigungsaufwand die Betriebssicherheit von Zellenradschleusen zu erhöhen, die mit einer hohen Differenz des Gasdrucks im Zulauf- und Auslaufschacht betrieben werden.

## Lösung

Die Aufgabe wird erfindungsgemäß dadurch gelöst, daß die Zentrumspunkte der Kreisbogen um einen Abstand (d) zueinander beabstandet sind.

Bei Zellenradschleusen, die im Bereich der in Drehrichtung vor dem Zulaufschacht befindlichen Entlüftungsöffnung zu einem abkühlungsbedingten Verzug der Gehäusebohrung neigen, sind die Zentrumspunkte der Kreisbogen nach einer besonderen Ausführung der Erfindung auf einer gemeinsamen Geraden angeordnet, die gegenüber der Zulaufschacht und Auslaufschacht verbindenden Achse um einen Winkel $(\alpha)$ in Richtung der Entlüftungsöffnung gedreht ist.

Dabei wird der Zentrumspunkt des zweiten, der Entlüftungsöffnung zugewandten Kreisbogens auf der Geraden bevorzugt gegenüber dem Zentrumspunkt des ersten Kreisbogens um einen Abstand d in Richtung der Entlüftungsöffnung versetzt. Der Radius des ersten Kreisbogens ist dabei vorteilhafterweise größer ist als der Radius des zweiten Kreisbogens.

Ist beim Betreiben einer Zellenradschleuse ein erhöhter Versatz des Zellenrads in Richtung des Zulaufschacht zu erwarten, beispielsweise bei einer sehr hohen Druckdifferenz zwischen Zulauf- und Auslaufschacht, sind die Zentrumspunkte der Kreisbogen nach einer weiteren Möglichkeit der Erfindung auf einer sich im wesentlichen vom Zulaufschacht zum Auslaufschacht erstreckenden Achse angeordnet und um einen Abstand d beabstandet sind, wobei die geringste lichte Weite des von den Kreisbogen begrenzten Querschnitts größer ist als die radiale Ausdehnung (Durchmesser) des Zellenrads.

Die Kreisbogen können dabei den gleichen Radius aufweisen. Fertigungstechnisch besonders einfach ist die Erfindung auszuführen, wenn die jeweiligen Endpunkte der Kreisbogen unmittelbar miteinander verbunden sind. Alternativ können die Kreisbogen halbkreisförmig ausgebildet werden, wobei ihre jeweiligen Endpunkte durch gerade Bohrungsabschnitte miteinander verbunden sind.

Das Zellenrad wird im drucklosen Zustand bevorzugt im wesentlichen koaxial zu demjenigen Kreisbogen ausgerichtet, der beim Betreiben der Zellenradschleuse dem Schacht mit dem höheren Druckniveau zugewandt ist.

Eine Zellenradschleuse mit einer zwei Kreisbogen umfassenden Gehäusebohrung läßt sich auf einfache Weise dadurch herstellen, daß das Gehäuse auf der Bearbeitungsmaschine zuerst auf den Zentrumspunkt des ersten Kreisbogens justiert wird, woraufhin die Gehäusebohrung durch spanende Bearbeitung auf den Radius des ersten Kreisbogens ausgearbeitet wird. Nachfolgend wird das Gehäuse durch Versetzen um einen Abstand d auf den Zentrumspunkt des zweiten Kreisbogens justiert und die Gehäusebohrung spanend auf den Radius des zweiten Kreisbogens ausgearbeitet. Das Ausarbeiten erfolgt bevorzugt durch Ausdrehen oder Ausschleifen, grundsätzlich ist jedoch beispielsweise auch eine Bearbeitung durch Stoßen oder Hobeln möglich. Dabei können nach einer speziellen Anwendung der Erfindung tangential an den Kreisbogen anliegende, diese verbindende gerade Bohrungsabschnitte ausgearbeitet werden.

**Figuren**

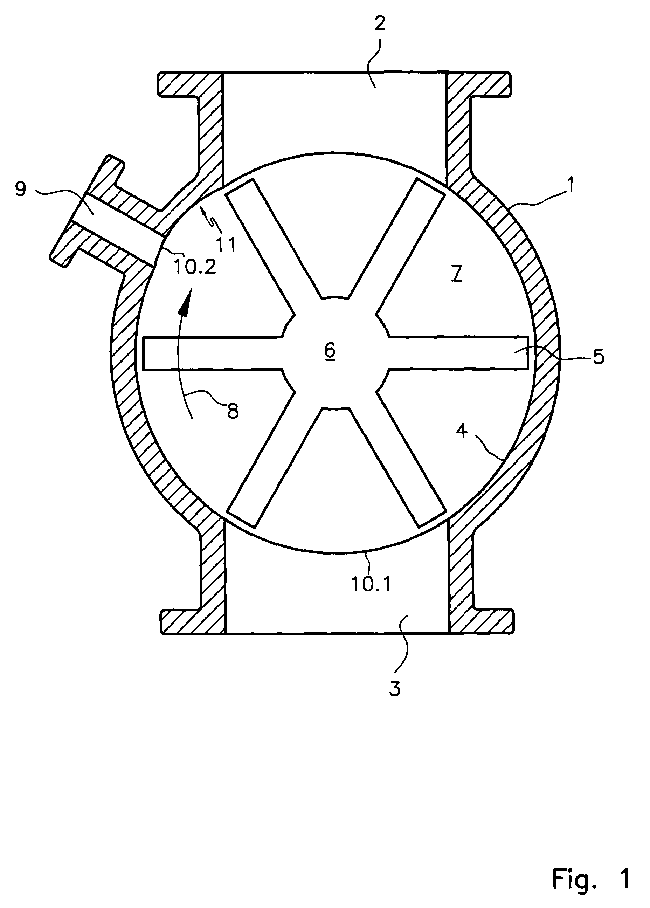

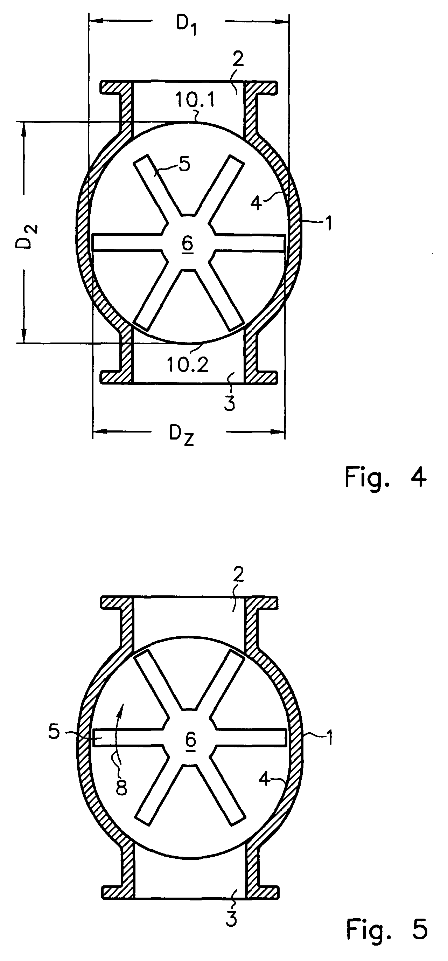

Die Erfindung wird nachfolgend beispielhaft anhand der schematisch dargestellten Figuren 1 bis 8 näher erläutert. Zum besseren Verständnis der Erfindung sind die Zeichnungen nicht maßstäblich ausgeführt. Insbesondere sind die Spalte, die tatsächlich einige Zehntel Millimeter breit sind, erheblich überzeichnet dargestellt.

Es zeigen:

Fig. 1    einen Längsschnitt durch eine erfindungsgemäße Zellenradschleuse

Fig. 2    den Längsschnitt durch das zugehörige Gehäuse

Fig. 3    einen vergrößerten Ausschnitt aus Figur 2

Fig. 4    einen Längsschnitt durch eine Zellenradschleuse im Montagezustand nach einer anderen Ausführung der Erfindung

Fig. 5    die Zellenradschleuse nach Fig. 4 im Betrieb

Fig. 6    eine erfindungsgemäß gestaltete Bohrung für diese Zellenradschleuse

Fig. 7    eine weitere erfindungsgemäße Bohrung

Fig. 8    eine Zellenradschleuse mit kreisförmigem Bewegungsraum nach dem Stand der Technik

Das Gehäuse 1 der in Figur 1 dargestellten Zellenradschleuse ist mit einem Zulaufschacht 2 für die Zufuhr von Schüttgut sowie einem Auslaufschacht 3 versehen, über den das Schüttgut in eine nicht abgebildete, unter hohem Gasdruck stehende Förderleitung ausgetragen wird. Zwischen Zulaufschacht 2 und Auslaufschacht 3 ist eine Gehäusebohrung 4 vorgesehen, in der ein mit radialen Stegen 5 versehenes Zellenrad 6 drehbar angeordnet ist. Die Stege 5 bilden in Verbindung mit der Gehäusebohrung 4 eine Vielzahl einzelner Kammern 7, mittels derer das Schüttgut bei Drehung des Zellenrades in Drehrichtung 8 vom Zulaufschacht 2 zum Auslaufschacht 3 überführt wird.

Das von den entleerten, nachfolgend aufwärts drehenden Kammern 7 aus der Förderleitung aufgenommene, verdichtete Fördergas wird vor dem erneuten Erreichen des Zulaufschachts 2 über eine Entlüftungsöffnung 9 auf den im Zulaufschacht 2 herrschenden, in der Regel atmosphärischen Druck entspannt, damit das Wiederbefüllen der Kammern 7 mit Schüttgut nicht durch in den Zulaufschacht entweichendes Fördergas behindert wird.

Die radialen Enden der Stege 5 sind nur über einen engen Spalt von der Wandung der Gehäusebohrung 4 beabstandet, der dem Fördergas einen erheblichen Strömungswiderstand entgegensetzt. Auf diese Weise können Fördergasverluste infolge Spaltströmung, die zusätzlich zu den zuvor beschriebenen Schöpfverlusten auftreten, in vertretbaren Grenzen gehalten werden. Dieses allgemein übliche Vorgehen kann jedoch zu Betriebsstörungen führen, wenn sich die Gehäusebohrung 4 zeitweise aufgrund ungleichmäßiger Erwärmung oder Abkühlung des Gehäuses 1 verformt und sich der Abstand zwischen Steg und Wandung der Gehäusebohrung in unzulässigem Maße verringert. Eine derartige lokale Abkühlung kann auftreten, wenn unter hohem Druck stehendes Fördergas aus den Kammern 7 über die Entlüftungsöffnung 9 auf einen niedrigen Druck entspannt, wodurch sich die Gehäusebohrung 4 im Bereich der Entlüftungsöffnung 9 zum Zellenrad 6 hin zusammenzieht.

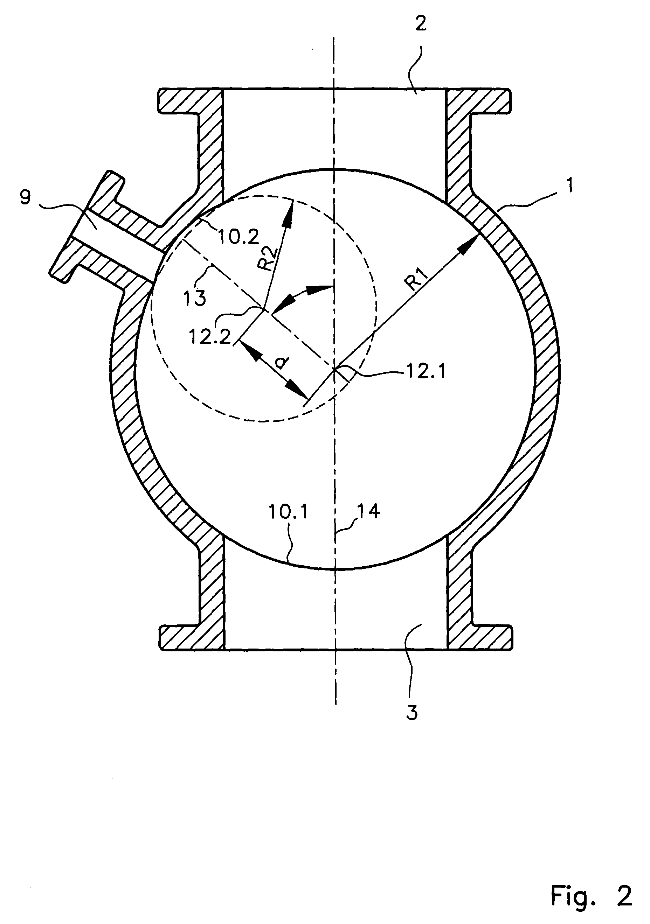

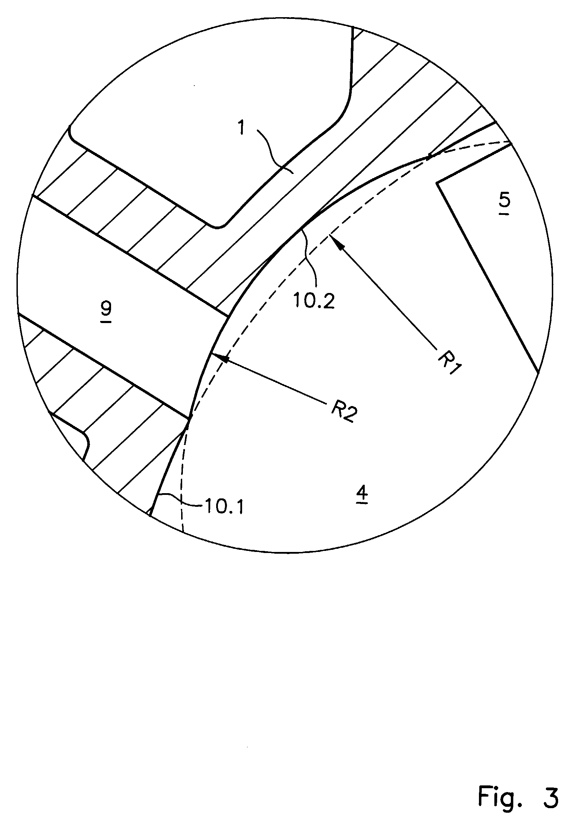

Erfindungsgemäß ist in den Bereichen des Gehäuses 1, in denen eine temperaturbedingte Verformung der im Querschnitt im wesentlichen von einem ersten Kreisbogen 10.1 gebildeten Gehäusebohrung 4 zu erwarten ist, eine durch einen zweiten Kreisbogen 10.2 gebildete Ausnehmung 11 vorgesehen, die sich zumindest über die Breite des Zellenrades 6 erstreckt. Die Ausnehmung 11 ist, wie aus den Figuren 2 und 3 ersichtlich, kreisbogenförmig ausgebildet, wobei der erste Kreisbogen einen Radius $R_1$ und der zweite Kreisbogen einen Radius $R_2$ aufweist. Der Zentrumspunkt 12.1 des ersten Kreisbogens 10.1 und der Zentrumspunkt 12.2 der durch den zweiten Kreisbogen 10.2 gebildeten Ausnehmung 11 liegen auf einer gemeinsamen Geraden 13. Diese ist gegenüber einer im Ausführungsbeispiel vertikal ausgerichteten, das Zentrum des Zulaufschachts 2 und das Zentrum des Auslautschachtes 3 verbindenden Achse 14 in Richtung der Entlüftungsöffnung 9 um einen Winkel α gedreht.

Um die Ausnehmung 11 auf einfache Weise durch spanende Fertigungsverfahren in die Gehäusebohrung 4 einbringen zu können, ist der Zentrumspunkt 12.2 der Ausnehmung 11 auf der Geraden 14 bevorzugt um einen Abstand d gegenüber dem Zentrumspunkt 12.1 des ersten Kreisbogens in Richtung der Entlüftungsöffnung 9 zu versetzen, wobei der Radius $R_1$ des ersten, den größten Teil der Gehäusebohrung bildenden Kreisbogens 10.1 größer gewählt wird als der Radius $R_2$ der kreisbogenförmigen Ausnehmung 11.

Eine erfindungsgemäße Zellenradschleuse läßt sich, wie in Figur 2 angedeutet, in diesem Fall beispielsweise auf einer Karusseldrehmaschine fertigen. In einem ersten Arbeitsschritt wird das Gehäuse auf den Zentrumspunkt 11 der im Gußteil vorgesehenen Gehäusebohrung 4 zentriert. Nachfolgend ist der ersten Kreisbogen 10.1 der Gehäusebohrung 4 spanend durch Drehen auf den Radius $R_1$ aufzuarbeiten. Anschließend wird das Gehäuse 1 auf der Karusseldrehmaschine unter Berücksichtigung des Winkels α um den Abstand d versetzt und die kreisbogenförmige Ausnehmung 11 mit dem Radius $R_2$ ausgearbeitet. In gleicher Weise wird verfahren, wenn am Gehäuse nach dem Auskleiden der Gehäusebohrung 4 mit einer verschleißfesten Beschichtung eine Nachbearbeitung durch Schleifen zu erfolgen hat.

Dadurch, daß der Radius $R_2$ deutlich kleiner gewählt wird als der Radius $R_1$, vergrößert sich der Abstand d, was eine Vereinfachung der Justierung der Zentrumspunkte 12.1, 12.2 auf der Drehmaschine zur Folge hat.

Bei dem in Figur 4 dargestellten, im grundsätzlichen Aufbau mit der zuvor beschriebenen Zellenradschleuse übereinstimmenden Ausführungsbeispiel sollen der Zulaufschacht beim Betreiben einem niedrigen Gasdruck und der Auslaufschacht 3 einem sehr hohen Gasdruck ausgesetzt werden.

Die Gehäusebohrung 4 weist einen Querschnitt auf, der einen oberen Kreisbogen 10.1 und einen unteren Kreisbogen 10.2 umfaßt. Die geringste lichte Weite $D_1$ des Querschnitts ist so bemessen, daß sich zwischen dem Zellenrad 6 mit der radialen Ausdehnung $D_Z$ und der Ausdehnung $D_1$ der Gehäusebohrung 4 seitlich ein Spalt einstellt, der Fertigungstoleranzen und Wärmeausdehnung ausgleicht und eine Berührung der Stege 5 und Gehäusebohrung 4 zuverlässig verhindert, dem Leckagegasstrom jedoch den gewünschten hohen Strömungswiderstand entgegensetzt.

Der Querschnitt der Gehäusebohrung 4 weist seine größte lichte Weite $D_2$ zwischen dem Zulaufschacht 2 und dem Auslaufschacht 3, also in Richtung des Druckgefälles auf. Bei der Montage wird das Zellenrad 6 koaxial zum unteren Kreisbogen 10.2 angeordnet, so daß seine Stege 5 auf der Seite des Auslaufschachts 3 einen Spalt 15 zur Gehäusebohrung 4 aufweisen, dessen Breite insbesondere ebenfalls $(D_1 - D_Z)/2$ beträgt. Auf der dem Zulaufschacht 2 zugewandten Seite ist der Spalt 15 hingegen erheblich breiter.

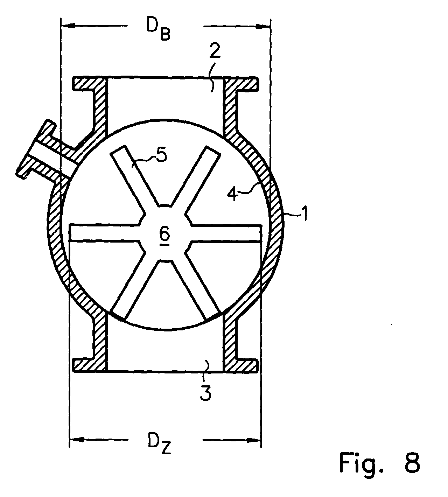

Beim Betrieb der Zellenradschleuse wird das Zellenrad 6, wie aus Figur 8 ersichtlich, infolge des Überdrucks im Auslaufschacht 3 zum Zulaufschacht 2 hin versetzt. Dabei verändert sich die Breite der seitlichen Spalte nicht, so daß der Leckagegasstrom vom Auslaufschacht 3 zum Zulaufschacht 2 entlang des Umfangs der Gehäusebohrung 4 vergleichsweise gering bleibt.

Soll die Zellenradschleuse mit einem Überdruck im Zulaufschacht 2 betrieben werden, wird das Zellenrad 6 koaxial zum oberen Kreisbogen 10.1 montiert.

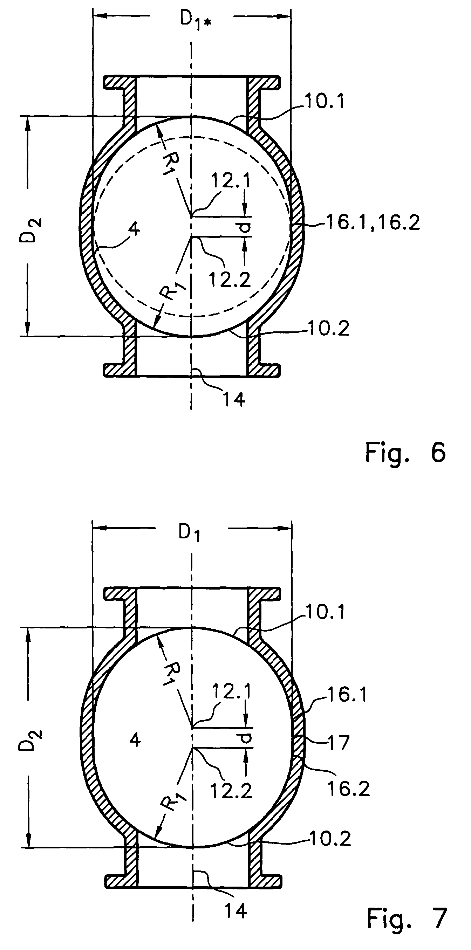

Figur 6 zeigt eine bevorzugte Gestaltung der Gehäusebohrung 4, deren Querschnitt von zwei Kreisbogen 10.1, 10.2 mit dem gleichen Radius $R_1$ gebildet wird, wobei die Zentrumspunkte 12.1, 12.2 der Kreisbogen 10.1, 10.2 auf einer sich vom Zulaufschacht 2 zum Auslaufschacht 3 erstreckenden Achse 14 angeordnet und um das Maß d beabstandet sind. Da der Zulaufschacht 2 in einer Flucht mit dem Auslaufschacht 3 angeordnet ist, verläuft die Achse 14 vertikal.

Die größte radiale Ausdehnung $D_2$ des Querschnitts der Gehäusebohrung 4 findet sich daher zwischen dem Zulaufschacht 2 und dem Auslaufschacht 3. Ihr Maß setzt sich aus dem Radius $R_1$ des Kreisbogens 10.1, dem Radius $R_1$ des Kreisbogens 10.2 und dem Abstand d der Zentrumspunkte 12.1, 12.2 zusammen. Die geringste radiale Ausdehnung $D_{1*}$ des trochoidalen Querschnitts ist geringer als der Durchmesser der Kreisbogen 10.1, 10.2, da diese in der horizontalen Mittelebene der Gehäusebohrung 4 bereits wieder aufeinander zulaufen. Diese Verengung ist üblicherweise um einige Größenordnungen kleiner als der Abstand d und stört daher in der Regel nicht. Eine derartige Gehäusebohrung 4 ist wiederum auf einfache Weise auf einer Karusseldrehmaschine zu realisieren, wobei das Gehäuse 1 nacheinander auf jeden der Zentrumspunkte 12.1, 12.2 ausgerichtet und nach jeder Justierung der entsprechende Kreisbogen 10.1, 10.2 ausgedreht wird.

In Sonderfällen kann die zuvor genannte Verengung, wie aus Figur 7 ersichtlich, dadurch vermieden werden, daß die Kreisbogen 10.1, 10.2 halbkreisförmig ausgebildet sind, wobei ihre Endpunkte 16.1, 16.2 jeweils über tangential an den Kreisbogen 10.1, 10.2 anliegende gerade Bohrungsabschnitte 17 miteinander verbunden sind. Die geringste lichte Weite $D_1$ entspricht in diesem Fall genau dem Durchmesser der Kreisbogen 10.1, 10.2. Die Fertigung dieser allgemein als „Langtoch" bezeichneten Bohrung ist jedoch aufwendiger als die Herstellung des unter Figur 6 dargestellten Querschnitts, da die aus Figur 7 ersichtliche Verengung in der Regel nachträglich abgetragen wird.

Das erfindungsgemäße Vorgehen ist selbstverständlich nicht auf Zellenradschleusen mit zylinderförmiger Gehäusebohrung beschränkt, sondern kann vielmehr auch auf bei anderen Bohrungsquerschnitten, beispielsweise bei in axialer Richtung konisch verjüngten Gehäusebohrungen mit Vorteil eingesetzt werden.

## Bezugszeichenliste

1   Gehäuse
2   Zulaufschacht
3   Auslaufschacht
4   Gehäusebohrung
5   Steg
6   Zellenrad
7   Kammer
8   Drehrichtung
9   Entlüftungsöffnung
10  Kreisbogen
11  Ausnehmung
12  Zentrumspunkt
13  Gerade
14  Achse
15  Spalt
16  Endpunkt
17  gerader Bohrungsabschnitt

## Patentansprüche

**1.** Zellenradschleuse zum Fördern oder Dosieren von Schüttgut, umfassend ein Gehäuse (1) mit einem Zulaufschacht (2) und einem Auslaufschacht (3) für das Schüttgut sowie ein in einer Gehäusebohrung (4) drehbar gelagertes Zellenrad (6) mit einer Anzahl sich im wesentlichen radial erstreckender Stege (5), wobei der Querschnitt der Gehäusebohrung zwei sich zumindest über die axiale Breite des Zellenrads erstreckende Kreisbogen (10.1), (10.2) umfaßt, dadurch gekennzeichnet, daß die Zentrumspunkte (12.1), (12.2) der Kreisbogen um einen Abstand (d) zueinander beabstandet sind.

**2.** Zellenradschleuse nach Anspruch 1, dadurch gekennzeichnet, daß im Gehäuse (1) zur Entlüftung der jeweils aufwärts drehenden Kammern eine in Drehrichtung (8) vor dem Zulaufschacht (2) befindliche Entlüftungsöffnung (9) angeordnet ist, wobei die Zentrumspunkte (12.1), (12.2) der Kreisbogen (10.1), (10.2) auf einer gemeinsamen Geraden (13) angeordnet sind, die gegenüber der Zulaufschacht und Auslaufschacht verbindenden Achse (14) um einen Winkel ($\alpha$) in Richtung der Entlüftungsöffnung gedreht ist.

**3.** Zellenradschleuse nach Anspruch 2, dadurch gekennzeichnet, daß der Zentrumspunkt (12.2) des zweiten Kreisbogens (10.2) auf der Geraden (13) gegenüber dem Zentrumspunkt (12.1) des ersten Kreisbogens (10.1) um einen Abstand (d) in Richtung der Entlüftungsöffnung (9) versetzt ist.

**4.** Zellenradschleuse nach Anspruch 3, dadurch gekennzeichnet, daß der Radius ($R_1$) des ersten Kreisbogens (10.1) größer ist als der Radius ($R_2$) des zweiten Kreisbogens (10.2).

**5.** Zellenradschleuse nach Anspruch 1, dadurch gekennzeichnet, daß die Zentrumspunkte (12.1), (12.2) der Kreisbogen (10.1), (10.2) auf einer sich im wesentlichen vom Zulaufschacht (2) zum Auslaufschacht (3) erstreckenden Achse (14) angeordnet und zueinander um einen Abstand (d) beabstandet sind, wobei die geringste lichte Weite des von den Kreisbogen begrenzten Querschnitts größer ist als die radiale Ausdehnung des Zellenrades (6).

**6.** Zellenradschleuse nach Anspruch 5, dadurch gekennzeichnet, daß die Kreisbogen (10.1), (10.2) den gleichen Radius ($R_1$) aufweisen.

**7.** Zellenradschleuse nach Anspruch 5 oder 6, dadurch gekennzeichnet, daß die jeweiligen Endpunkte (16.1), (16.2) der Kreisbogen (10.1), (10.2) unmittelbar miteinander verbunden sind.

**8.** Zellenradschleuse nach Anspruch 5 oder 6, dadurch gekennzeichnet, daß die Kreisbogen (10.1), (10.2) halbkreisförmig ausgebildet sind, wobei ihre jeweiligen Endpunkte (16.1), (16.2) durch gerade Bohrungsabschnitte (17) miteinander verbunden sind.

**9.** Zellenradschleuse nach einem der Ansprüche 5 bis 8, dadurch gekennzeichnet, daß das Zellenrad (6) im drucklosen Zustand im wesentlichen koaxial zu demjenigen Kreisbogen (10.1), (10.2) ausgerichtet ist, der beim Betreiben der Zellenradschleuse dem Schacht (2), (3) mit dem höheren Druckniveau zugewandt ist.

**10.** Verfahren zur Herstellung einer zwei Kreisbogen (10.1), (10.2) umfassenden Gehäusebohrung (4) im Gehäuse (1) einer Zellenradschleuse, mit den Arbeitsschritten:

- Justieren der Gehäuses auf den Zentrumspunkt (12.1) des ersten Kreisbogens (10.1)
- spanendes Ausarbeiten der Gehäusebohrung (4) auf den Radius des ersten Kreisbogens (10.1)
- Justieren des Gehäuses auf den Zentrumspunkt (12.2) des zweiten Kreisbogens (10.2) durch Versetzen um einen Abstand (d)
- spanendes Ausarbeiten der Gehäusebohrung (4) auf den Radius des zweiten Kreisbogens (10.2)

**11.** Verfahren nach Anspruch 10, gekennzeichnet durch ein spanendes Ausarbeiten tangentialer, die Kreisbögen (10.1), (10.2) verbindender gerader

Bohrungsabschnitte (17).

Fig. 1

Fig. 2

Fig. 3

Fig. 4

Fig. 5

Fig. 6

Fig. 7

Fig. 8

Europäisches
Patentamt

**EUROPÄISCHER RECHERCHENBERICHT**

Nummer der Anmeldung

EP 99 11 7772

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 3 250 406 A (M. LONG ET AL.)<br>10. Mai 1966 (1966-05-10)<br>* Spalte 2, Zeile 21 - Zeile 34; Abbildung 1 * | 1,10 | B65G53/46 |
| A | DE 23 50 033 A (JAUDT ANDREAS)<br>10. April 1975 (1975-04-10)<br>* Seite 3, Absatz 1; Abbildung 1 * | 1,10 | |
| A | GB 2 192 164 A (COAL IND)<br>6. Januar 1988 (1988-01-06)<br>* das ganze Dokument * | 1 | |
| P,X | DE 298 19 748 U (WAESCHLE GMBH)<br>18. Februar 1999 (1999-02-18)<br>* das ganze Dokument * | 1,5-9 | |
| P,X | DE 298 19 747 U (WAESCHLE GMBH)<br>18. Februar 1999 (1999-02-18)<br>* das ganze Dokument * | 1-4 | |
| A | DE 298 00 789 U (WAESCHLE MASCHF GMBH)<br>12. März 1998 (1998-03-12) | | RECHERCHIERTE SACHGEBIETE (Int.Cl.7)<br><br>B65G |

Der vorliegende Recherchenbericht wurde für alle Patentansprüche erstellt

| Recherchenort | Abschlußdatum der Recherche | Prüfer |
|---|---|---|
| DEN HAAG | 21. Februar 2000 | Beernaert, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 99 11 7772

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-02-2000

| Im Recherchenbericht angeführtes Patentdokument | | Datum der Veröffentlichung | Mitglied(er) der Patentfamilie | | Datum der Veröffentlichung |
|---|---|---|---|---|---|
| US 3250406 | A | 10-05-1966 | KEINE | | |
| DE 2350033 | A | 10-04-1975 | JP | 1130765 C | 17-01-1983 |
| | | | JP | 50060969 A | 26-05-1975 |
| | | | JP | 57024290 B | 24-05-1982 |
| GB 2192164 | A | 06-01-1988 | KEINE | | |
| DE 29819748 | U | 18-02-1999 | KEINE | | |
| DE 29819747 | U | 18-02-1999 | KEINE | | |
| DE 29800789 | U | 12-03-1998 | KEINE | | |

EPO FORM P0461

Für nähere Einzelheiten zu diesem Anhang : siehe Amtsblatt des Europäischen Patentamts, Nr.12/82